# EUROPÄISCHE PATENTSCHRIFT

(11) **EP 0 770 945 B1**
(45) Veröffentlichungstag und Bekanntmachung des Hinweises auf die Patenterteilung: **24.02.1999**
(21) Anmeldenummer: 96116747.5
(22) Anmeldetag: 18.10.1996
(51) Int. Cl.: G05B 23/02, G05B 13/02

(54) **Verfahren zum automatisierten Erstellen eines verfahrenstechnischen Schemas**
Method for the automated generation of a technical process scheme
Procédé pour la génération automatique des schémas de procédés industriels

(30) Priorität: 24.10.1995 DE 19539479
(43) Veröffentlichungstag der Anmeldung: 02.05.1997
(73) Patentinhaber: ABB PATENT GmbH, 68309 Mannheim (DE)
(72) Erfinder: Erni, Karin, 69123 Heidelberg (DE); Rupp, Olaf, 68519 Viernheim (DE); Wilhelm, Georg, 68723 Schwetzingen (DE)
(74) Vertreter: Rupprecht, Klaus, Dipl.-Ing.

(56) Entgegenhaltungen:
- EP-A- 0 384 910
- EP-A- 0 626 697

## Beschreibung

Die Erfindung bezieht sich auf ein Verfahren zum automatisierten Erstellen eines verfahrenstechnischen Schemas für einen konkreten technischen Prozeß.

Es handelt sich dabei um verfahrenstechnische Schemata, die geeignet sind als Basis für die Generierung leittechnischer Lösungen, z.B. zur Erstellung von leittechnischen Funktionsplänen, wobei die Generierung leittechnischer Lösungen jedoch nicht Gegenstand des hier beschriebenen Verfahrens ist.

Verfahrenstechnische Schemata der hier behandelten Art beinhalten die für die Anlagenautomatisierung notwendigen Daten, besonders wesentliche verfahrenstechnische Komponenten, z.B. Behälter, ferngesteuerte bzw. geregelte Armaturen, Pumpen sowie andere Aggregate und fern übertragene Messungen.

Das Schema beinhaltet dagegen keine Daten, die für die Leittechnik unwichtig sind, wie Auslegungsdaten (z.B. Nennwerte), Handarmaturen ohne Überwachung sowie Vor-Ort-Messungen.

Grundlage zur Erstellung von verfahrenstechnischen Schemata für einen bestimmten Prozeßabschnitt sind konkrete prozeßtechnische Unterlagen, in denen Anforderungen des zugrundeliegenden technischen Prozesses zusammengestellt sind. Die zugrundeliegenden prozeßtechnischen Unterlagen sind - ohne weitere Aufbereitung - wenig geeignet zur Generierung leittechnischer Lösungen. Daher werden zur Erleichterung weiterer Bearbeitungsschritte, also zur Generierung leittechnischer Lösungen verfahrenstechnische Schemata der eingangs genannten Art benötigt.

Die zugrundeliegenden prozeßtechnischen Unterlagen haben nicht nur den Nachteil, daß sie in Papierform vorliegen und daß bisher keine Möglichkeit zur automatisierten Umsetzung in eine elektronische Form besteht, sondern auch, daß sie in der Regel unvollständig sind bezüglich der für die Leittechnikplanung notwendigen Angaben.

Bisher werden die für die Leittechnikplanung erforderlichen verfahrenstechnischen Schemata von einzelnen Planern oder von Planungsteams erstellt und vervollständigt durch aufwendige Erfassung und Umsetzung der Anforderungen des in den verfahrenstechnischen Unterlagen beschriebenen technischen Prozesses, unter Beachtung von Planungsrichtlinien, z.B. VGB (Vereinigung der Großkraftwerksbetreiber)-Richtlinien. Diese Vorgehensweise erfordert in jedem Projekt einen intensiven und zeitaufwendigen Einsatz von hochqualifizierten Planungsingenieuren; die Qualität der Ergebnisse ist vom jeweiligen Planer abhängig und läßt sich nur stichprobenweise prüfen.

Es besteht somit Bedarf an einem rationellen Verfahren zur Erstellung verfahrenstechnischer Schemata, das zugleich zu qualitativ besseren und besser prüfbaren Ergebnissen führt.

Einen Ansatz zu einer verbesserten Vorgehensweise bietet eine rechnerunterstützte wissensbasierte Erstellung von Schemata.

Im Aufsatz "Rechnergestützte Konfigurierung von RI-Fließbildern am Beispiel von Pumpen", Chem.-lng.-Tech. 66 (1994) Nr. 4,S. 470-475, wird auf Seite 470, linke Spalte darauf hingewiesen, daß es künftig möglich sein könnte, mit Hilfe intelligenter Systeme Rl-Fließbilder zu konfigurieren, womit wissensbasierte Systeme gemeint sind, die automatisiert Fließbilder herstellen können. Der Aufsatz will ein erster Schritt in diese Richtung sein (vgl. Seite 470, linke Spalte), wobei dieser Schritt in einem auf Seite 472 bis 474 beschriebenen Programmsystem besteht, das es einem Benutzer ermöglicht, im Dialogbetrieb ein Fließbild zu erstellen. Der Benutzer bekommt in einzelnen Programmschritten ein Menü von Lösungsmöglichkeiten angeboten und muß jeweils auswählen.

Der Erfindung liegt die Aufgabe zugrunde, einen Schritt weiterzugehen, nämlich ein Verfahren anzugeben, das eine vollständig automatisierte, wissensbasierte Generierung von verfahrenstechnischen Schemata ermöglicht.

Diese Aufgabe wird gelöst durch ein Verfahren mit den im Anspruch 1 angegebenen Merkmalen zum automatisierten Erstellen eines graphischen verfahrenstechnischen Schemas. Vorteilhafte Ausgestaltungen sind in weiteren Ansprüchen angegeben und den weiter unten beschriebenen Ausführungsbeispielen zu entnehmen.

Die erfindungsgemäße Generierung von Unterlagen hat eine Reihe von Vorteilen: Die Produktivität wird erhöht, die Planungszeit verkürzt, die Qualität und die Prüfbarkeit verbessert. Die nach dem Verfahren erstellten Schemata sind anwendbar im Rahmen eines umfangreichen Planungssystems für Kraftwerksleitsysteme. Das Verfahren generiert reproduzierbare Ergebnisse, d.h. für den gleichen Eingabevektor ergibt sich in jedem Fall das gleiche Schema.

Die automatisierte Erstellung konkreter verfahrenstechnischer Schemata, d.h. von Schemata für einen bestimmten, beispielsweise durch einen Kundenauftrag definierten und in verfahrenstechnischen Unterlagen beschriebenen technischen Prozeß erfolgt unter Verwendung eines abstrakten, hierarchisch gegliederten Verfahrensschemas, das an alle beabsichtigten, zulässigen oder denkbaren Anlagenvarianten anpassungsfähig ist. Die zur Konkretisierung erforderliche Anpassung des Schemas erfolgt automatisiert anhand von Eingabedaten, die den bestimmten Prozeß definieren.

Ein Expertensystem kann nicht nur wie herkömmliche Programme Daten nach einer vorgefertigten Befehlsfolge verändern, sondern auch einen Satz von vorgegebenen Regeln auf einen Datenbestand anwenden. Das Expertensystem wählt die gültigen Regeln selbständig aus und wendet sie an, bis es ein Ergebnis erreicht, das alle geltenden Regeln erfüllt. Dabei wird eine feste Vorgehensweise und ein festes Regelwerk verfolgt, so daß die Ergebnisse immer reproduzierbar und nachvollziehbar begründet sind.

Es können nach dem Verfahren zunächst Hersteller-neutral konfigurierte Schemata erstellt werden, die anschließend unter Verwendung eines Transferverfahrens in produkt- oder herstellerspezifische Lösungen umsetzbar sind.

Das Wissen im zugrundeliegenden Expertensystem ist zu einem großen Teil an die verfahrenstechnischen Komponenten, wie z. B. Kreiselpumpe, Behälter usw. fixiert. Die Komponenten sind hierarchisch unter abstrakten Überbegriffen gegliedert. Dadurch kann eine ganz Gruppe von Komponenten mit Hilfe des abstrakten Überbegriffs angesprochen werden. Beispielsweise kann eine abstrakte Armatur durch einen Schieber, ein Ventil oder eine Klappe verwirklicht werden. Eine Regel, die für Armaturen gilt, gilt automatisch für alle Schieber, Ventile und Klappen.

Eine hierarchische Struktur von Komponenten ist nachstehend beispielhaft dargestellt:

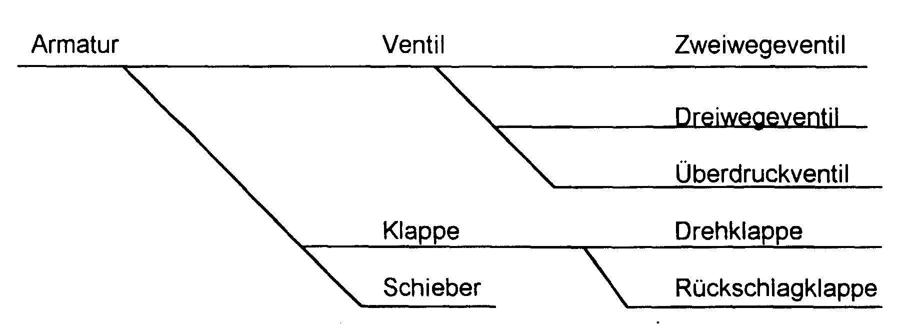

Die im technischen Prozeß, z.B. in einem Kraftwerk vorkommenden Komponenten werden im Expertensystem abstrakt formuliert. Komplexere verfahrenstechnische Komponenten (Baugruppen) bestehen wieder aus einfacheren Komponenten: z.B. besitzt ein kleiner Elektromotor Wälzlager und ein großer Elektromotor Gleitlager. Beim Elektromotor mit Gleitlagern wird die Schmierung der Lager über ein Ölversorgungssystem sichergestellt und die Lagertemperatur durch Temperaturmessungen überwacht.

Das Expertensystem enthält Regeln, die beschreiben, in welchen Fällen eine Komponente bestimmte weitere Eigenschaften bzw. Ausrüstungen aufweist. Zum Beispiel bestimmt sich die Größe des Elektromotors und damit der Lagertyp durch die benötigte Leistung der angetriebenen Komponente. Dadurch erreicht man, daß sich die Komponente entsprechend der verfahrenstechnischen Verwendung anpaßt.

In der Verfahrenstechnik wiederholen sich bestimmte Konstellationen von Grundkomponenten. Zum Beispiel besitzen die meisten Regelarmaturen einen Deckungsschieber. Diese Baugruppe aus Regelarmatur und Deckungsschieber kann in einem eigenen abstrakten Schema dargestellt und anschließend beliebig oft verwendet werden.

Das benutzte abstrakte Verfahrensschema ist in funktional sinnvolle Verfahrensmodule aufgeteilt. Ein Verfahrensmodul enthält einen verfahrenstechnischen Abschnitt, z.B. ein Speisewassersystem.

In jedem Verfahrensmodul ist das Anordnungswissen der Schemateile, z.B. Komponenten gespeichert. Dieses beinhaltet annähernd alle verfahrenstechnisch möglichen Varianten der Strecken, wie z.B. Parallelstränge oder Typen der Komponenten.

Dazu kommt Wissen über die spezielle Auslegung der Komponenten, die in der Regel von den Basisdaten der Anlage abgeleitet werden; z.B. wird die Fördermenge des Speisewasserpumpensystems von der Frischdampfmenge abgeleitet.

Das Verfahren zur automatischen Erstellung von verfahrenstechnischen Schemata in grafischer Form wird nachstehend anhand von in den Zeichnungsfiguren dargestellten Ausführungsbeispielen weiter erläutert.

Es zeigt
- Fig. 1: eine Übersicht zur automatischen Erstellung eines verfahrenstechnischen Schemas,
- Fig. 2: Verfahrensschritte zur Generierung von grafischen Verfahrensschemata,
- Fig. 3: Beispiel zur Generierung nach Fig. 2,
- Fig. 4: Bearbeitung einer Baugruppe,
- Fig. 5: Beispiel einer Bearbeitung nach Fig. 4,
- Fig. 6: Schritte zur Herstellung von Verbindungen in einer Baugruppe,
- Fig. 7: Beispiel zum Vorgehen nach Fig. 6,
- Fig. 8: Kennzeichnungsvergabe,
- Fig. 9: Beispiel zur Kennzeichnungsvergabe nach Fig. 8 und
- Fig. 10: Beispiel eines automatisch erstellten verfahrenstechnischen Schemas.

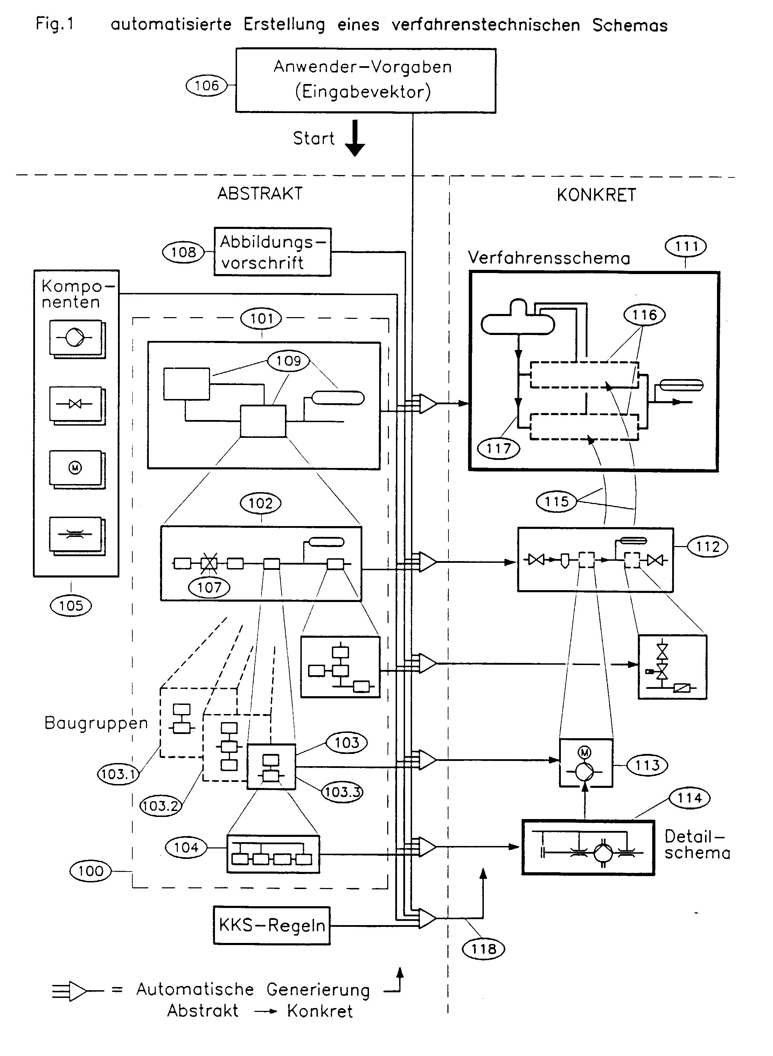

In Fig. 1 ist die verfahrensgemäße Vorgehensweise in einer Gesamtübersicht zeichnerisch dargestellt. Im linken Teil der Fig. 1 ist das abstrakte verfahrenstechnische Schema gezeigt. Mit Bezugszeichen 100 ist ein Gesamtschema für einen technischen Prozeß bezeichnet, und mit Bezugszeichen 101, 102, 103, 104 Detaillierungsstufen davon, wobei die oberste Ebene 101 das Gesamtschema in einer Grobstruktur wiedergibt.. Mit 103.1, 103.2, 103.3 sind beispielhaft Baugruppen-Varianten der Detaillierungsstufe 103 bezeichnet.

Das abstrakte Schema enthält in allen Detallierungsstufen 101 bis 104 Komponenten 105 und ihre Verbindungen, die durch abstrakte Platzhalter 109 repräsentiert sind. Die Verwendung der abstrakten Platzhalter 109 ist jeweils wissensbasiert im Bezug auf die verfahrenstechnische Aufgabe vorgegeben, d.h. welcher Typ der Komponente oder Baugruppe im konkreten Schema dargestellt werden soll. Auswählbare Komponenten 105 sind in Fig. 1 angedeutet. Es ist aber zu beachten, daß eine Komponente AK auch eine unterlagerte Baugruppe sein kann, wie aus den weiteren Ausführungen noch deutlich wird.

Für die Konkretisierung liegen Abbildungsvorschriften 108 vor, die die Abhängigkeit zwischen Anwendervorgaben 106 und abstraktem Schema angeben. Das Bezugszeichen 107 weist auf die Möglichkeit einer Anpassung durch Deaktivierung von Teilen des Schemas hin.

Auf der rechten Seite in Fig. 1 ist ein konkretes Verfahrensschema 111 mit Detaillierungsstufen 112 bis 114 dargestellt, das durch Verknüpfung des abstrakten Schemas 101 und der Baugruppen 102 bis 104 mit Komponenten 105 und Anwendervorgaben 106, die in Form von Eingabevektoren eingegeben werden, entsteht. Mit Bezugszeichen 115 wird auf die Möglichkeit hingewiesen, daß sogenannte Stränge 116 mehrfach in das konkrete Gesamtschema 111 einsetzbar sind. Das Bezugszeichen 114 weist auf die Möglichkeit hin, ein unterlagertes Detailschema einer Komponente anzulegen.

Mit Bezugszeichen 117 sind Richtungspfeile im konkreten Verfahrensschema bezeichnet, die für weitere Planungsschritte nützlich sind, und die eine Flußrichtung der Medien angeben.

Durch zusätzliche Verknüpfung mit Regeln eines Kennzeichnungssystems 118 kann eine automatisierte Kennzeichnung von Komponenten im Verfahrensschema 111 erreicht werden. In den Ausführungsbeispielen wird das Kraftwerkskennzeichnungssystem KKS benutzt.

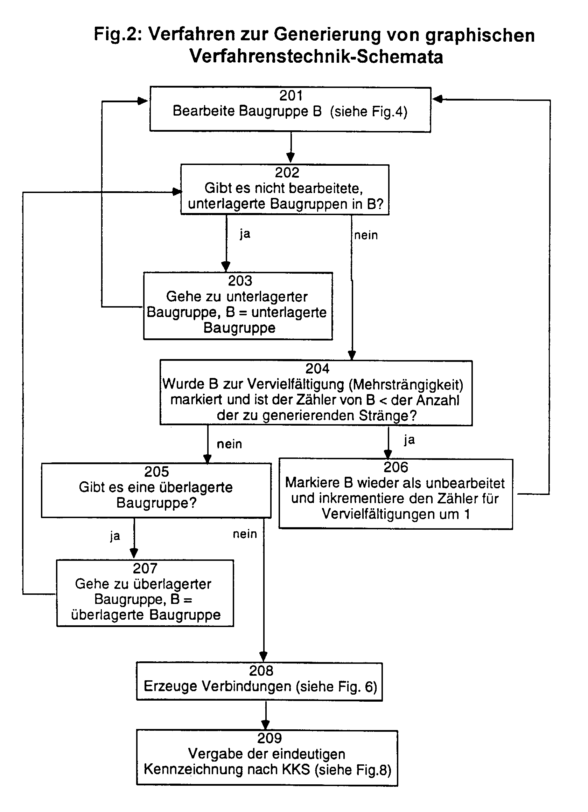

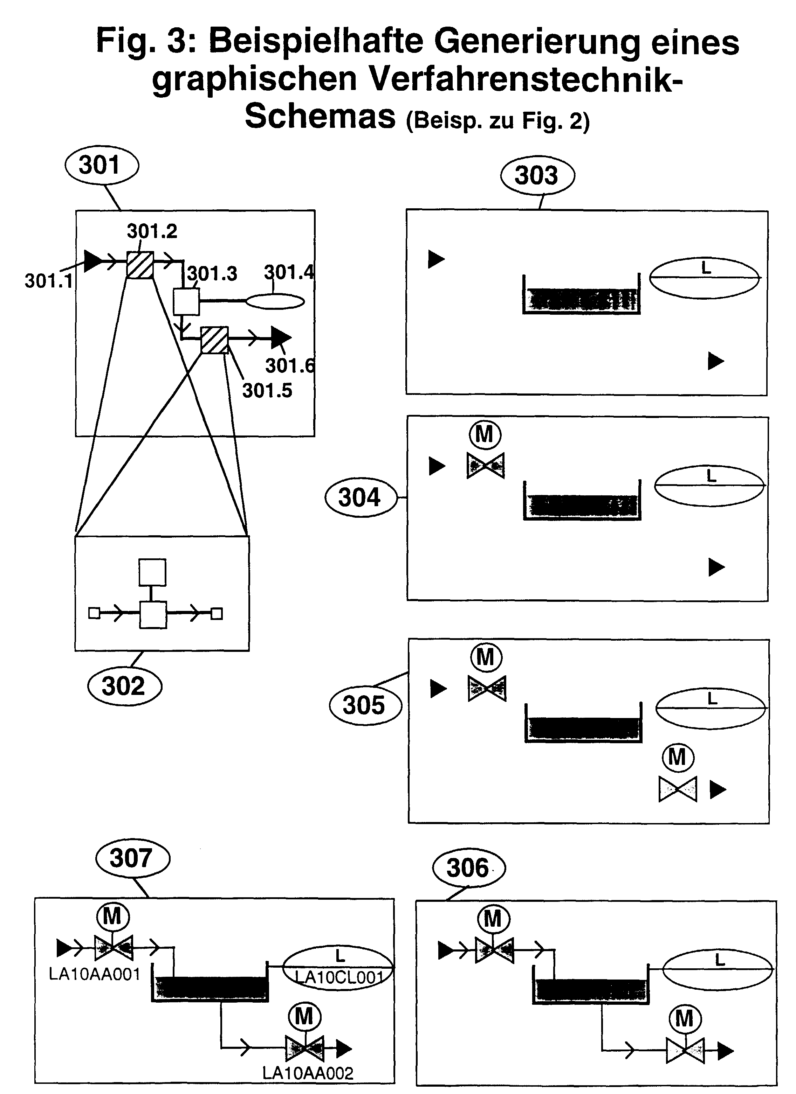

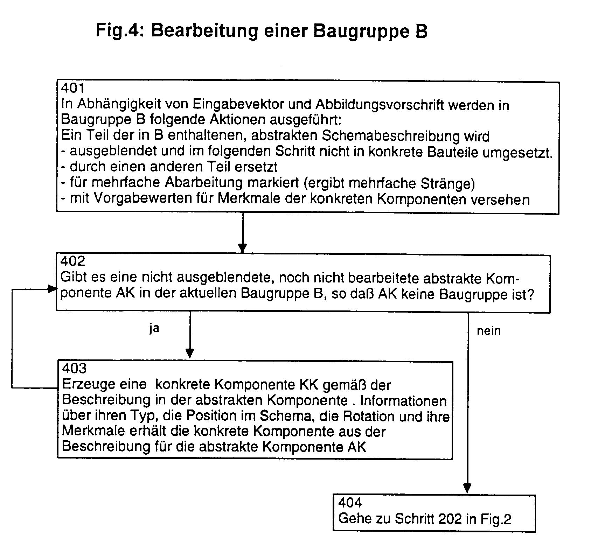

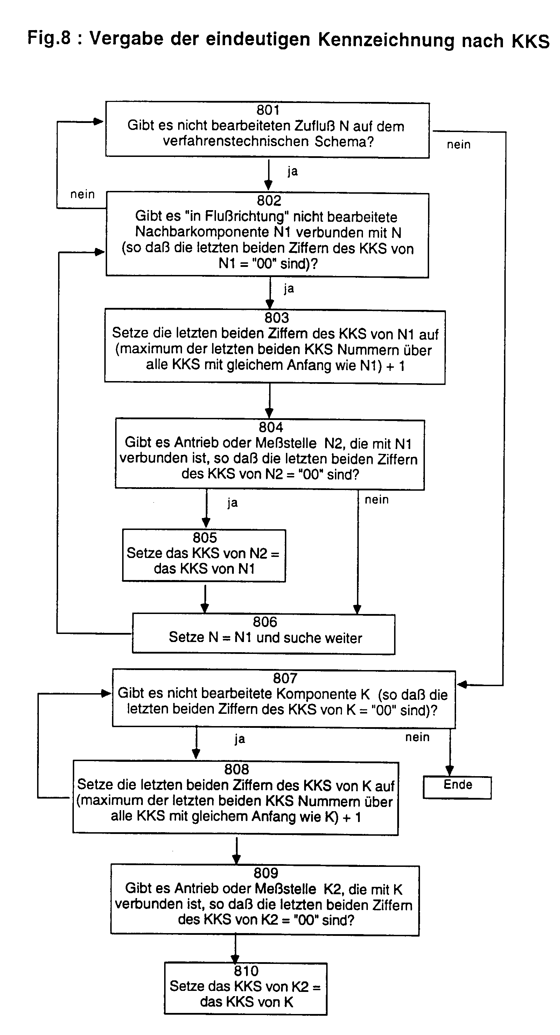

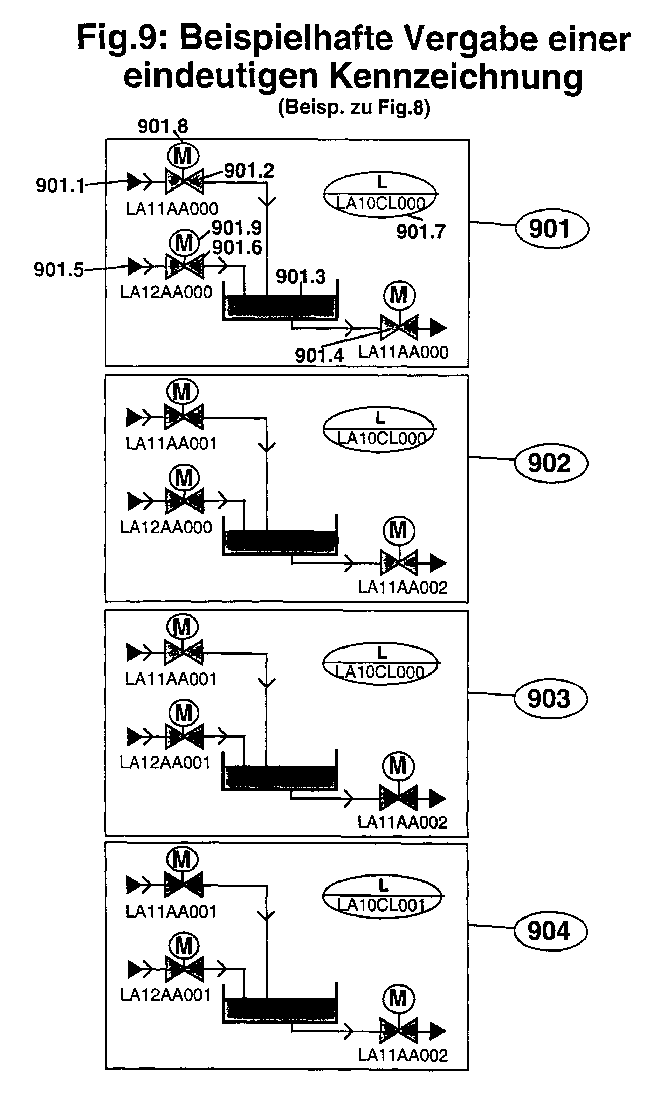

Anhand der Figuren 2, 4 und 6, die im Zusammenhang zu betrachten sind, und die auch mit der Übersicht in Fig. 1 korrespondieren, wird der verfahrensgemäße Ablauf näher erläutert. Mit Fig. 8 wird dazu ergänzend ein Verfahren zur Vergabe einer eindeutigen Kennzeichnung erläutert.

Die Figuren 3, 5, 7 und 9 veranschaulichen jeweils in einfachen Beispielen das anhand der Figuren 2, 4, 6 und 8 erläuterte Vorgehen.

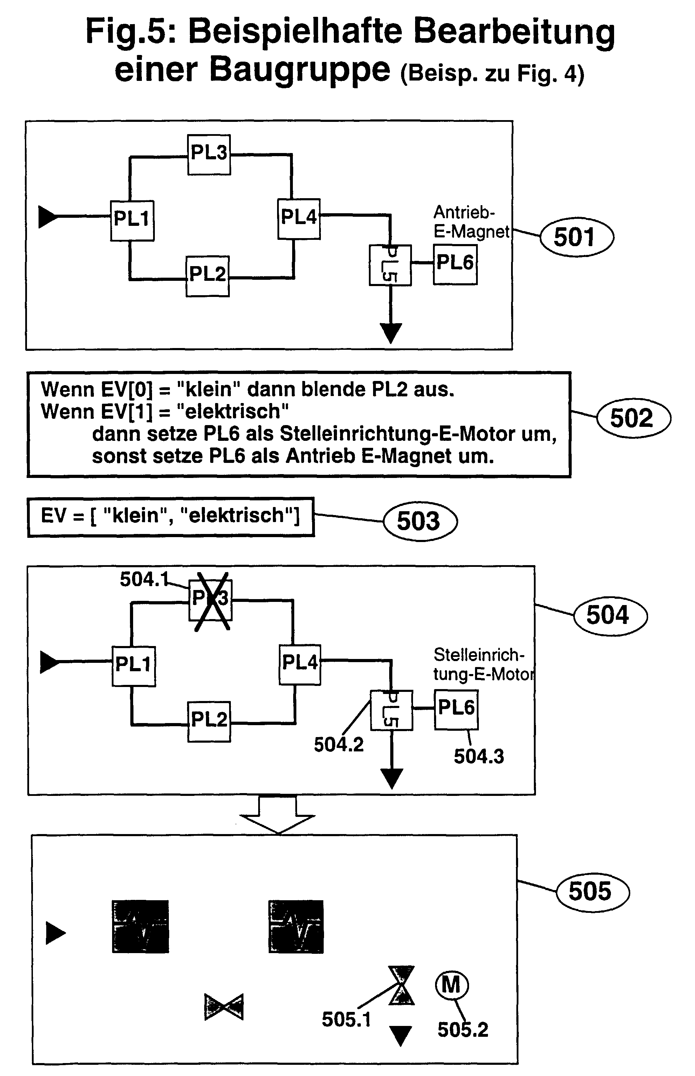

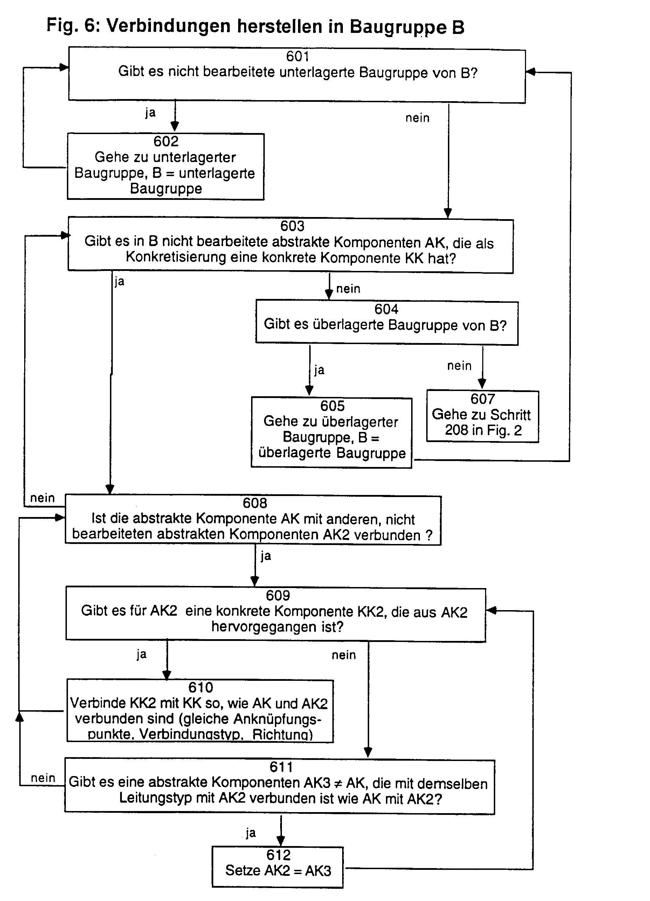

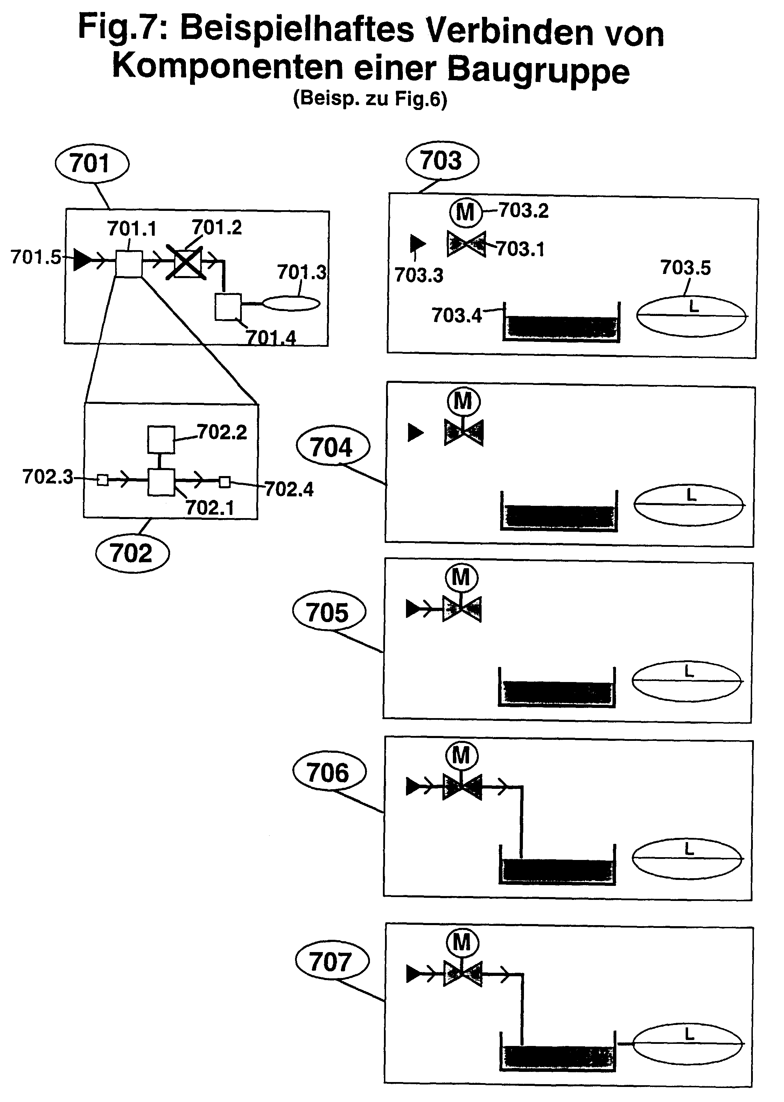

In Fig. 2 ist die verfahrensgemäße Vorgehensweise zur Generierung eines Schemas in einer Gesamtübersicht in einem Ablaufplan dargestellt. Das gesamte Schema wird als Baugruppe B auf oberster Ebene aufgefaßt, mit der im ersten Schritt 201 begonnen wird. Die Vorgehensweise im ersten Schritt ist in Fig. 4 detailliert dargestellt. Nachdem diese Baugruppe bearbeitet wurde, werden schrittweise absteigend die darunterliegenden Baugruppen bearbeitet; Schritte 202 und 203. Ist das Verfahren auf einer der untersten Ebenen angelangt, d.h. es gibt für die gerade bearbeitete Baugruppe B keine Unterbaugruppe mehr, (Schritt 202, NEIN-Verzweigung), so wird geprüft, ob die Baugruppe B zur Vervielfältigung markiert, aber noch nicht in genügender Anzahl kopiert wurde. Die Markierung zur Vervielfältigung geschieht durch die Zuordnung der Anzahl zu generierender Stränge zur Baugruppe (vgl. Schritt 401, Fig. 4). Während der Bearbeitung läuft für jede Baugruppe ein Zähler mit. Ist der Zählerstand kleiner der Anzahl zu generierender Stränge (vgl. Schritt 204) wird Baugruppe B wieder als unbearbeitet eingestuft, der mitlaufende Zähler für B wird um eins erhöht und B wird mit sämtlichen unterlagerten Baugruppen erneut bearbeitet (Schritt 201).
Wurde in Schritt 204 festgestellt, daß die Vervielfältigung nicht nötig oder bereits abgeschlossen ist, kehrt das Verfahren zu der darüberliegenden Baugruppe zurück (sofern es eine gibt, siehe 205 und 207) und versucht, dort wiederum in noch nicht bearbeitete Baugruppen hinabzusteigen (Schritt 202). Wenn es keine unbearbeiteten unterlagerten Baugruppen mehr gibt, und eventuelle Vervielfältigungen auch dort stattgefunden haben, steigt das Verfahren wieder eine Stufe auf (Schritte 205, 207), bis es schließlich wieder auf der obersten Baugruppe, dem abstrakten Schema, angelangt ist. Sind alle Baugruppen bearbeitet, werden die daraus entstandenen Komponenten verbunden (Schritt 208). Dieser Schritt ist in Fig. 6 detailliert dargestellt. Zum Schluß wird eine eindeutige Kennzeichnung gemäß Kennzeichnungssystem KKS an die Komponenten vergeben (Schritt 209). Dieser Schritt ist in Fig. 8 detailliert dargestellt.

In. Fig. 3 ist ein Beispiel für die Ergebnisse der Vorgehensweise gemäß Fig. 2 dargestellt. Gegeben ist ein abstraktes Schema 301 mit einer unterlagerten Baugruppe 302, die zweimal verwendet wird, nämlich durch die abstrakten Komponenten 301.2 und 301.5. Die gemäß Fig. 2, Bezugszeichen 201 zu bearbeitende Baugruppe B ist zunächst das mit Bezugszeichen 301 bezeichnete abstrakte Schema. Durch Bearbeitung gemäß Schritt 201 (Fig. 2) entsteht ein konkretes Teilschema 303, in dem die abstrakten Komponenten 301.1, 301.3, 301.4 und 301.6 in konkrete Komponenten umgesetzt wurden. Danach erfolgt gemäß den Schritten 202 und 203 ein Abstieg in die unterlagerte(n) Baugruppen. Schritt 201 (Fig. 2) wird dann mit der Baugruppe B gemäß Bezugszeichen 302 durchgeführt, und zwar je einmal für die abstrakte Komponente mit Bezugszeichen 301.2 und 301.5. Die Bearbeitung der abstrakten Komponente 301.2 führt zum konkreten Schema 304, die Bearbeitung von 301.5 zum Schema 305. In diesem Beispiel gibt es keine zur Vervielfältigung markierten Teile.

Nun sind alle abstrakten Komponenten abgearbeitet und die konkreten Komponenten werden gemäß Schritt 208 (Fig. 2) verbunden. Das Ergebnis ist in Bezugszeichen 306 dargestellt. Im letzten Schritt (Bezugszeichen 209, Fig. 2) werden allen Komponenten eindeutige Kennzeichen gemäß einem Kennzeichnungssystem (vergl. Fig. 8) zugeordnet. Ein fertiges graphisches Schema ist in Fig. 3 unter Bezugszeichen 307 dargestellt, wobei der Übersicht halber nur ein Teil der Kennzeichen eingetragen ist.

In Fig. 4 ist der Teil der verfahrensgemäßen Vorgehensweise zur Bearbeitung von Baugruppen dargestellt, wie sie laut Fig.2, Bezugszeichen 201 angestoßen wird. Zur Durchführung der in Fig. 4 angegebenen Verfahrensschritte 401 bis 403 liegt ein vom Anwender eingegebener Eingabevektor (vergl. Fig. 1 und Fig. 5, 503) vor, sowie für jede Baugruppe eine Abbildungsvorschrift (vergl. Beispiel in Fig. 5, 502), die angibt, wie das abstrakte Schema durch Werte des Eingabevektors verändert wird. Komponenten des abstrakten Schemas sind in Fig. 4 mit AK bezeichnet, Komponenten des konkreten Schemas mit KK. In Schritt 401, Fig. 4 wird das abstrakte Schema anhand des Eingabevektors und der Abbildungsvorschrift verändert. Komponenten werden ausgeblendet, ersetzt, für die Mehrfach-Abarbeitung der Stränge markiert, etc. Erst danach (Schritt 402, 403, Fig. 4) werden alle nicht ausgeblendeten, abstrakten Komponenten in konkrete Komponenten verwandelt, sofern es sich nicht um unterlagerte Baugruppen handelt. Der Typ von Komponente, in den die abstrakte Komponente verwandelt wird, ist dabei in den Informationen der abstrakten Komponente angegeben. Sind alle abstrakten Komponenten, außer denen, die Baugruppen repräsentieren abgearbeitet, wird weiter wie in Schritt 202, Fig. 2 beschrieben verfahren.

In Fig. 5 ist ein Beispiel für die Ergebnisse der Vorgehensweise gemäß Fig. 4 dargestellt. Gegeben ist ein abstraktes Schema 501, eine Abbildungsvorschrift 502 und ein Eingabevektor 503. Die Abbildungsvorschrift wertet den Eingabevektor aus und manipuliert das abstrakte Schema gemäß Schritt 401, Fig. 4. Als Folge werden, wie in Bezugszeichen 504 zu sehen, einzelne Komponenten ausgeblendet (z.B. Komponente 504.1), oder andere Komponenten ausgetauscht (z.B. Komponente 504.3) (Die Typen der übrigen abstrakten Komponenten sind in deren Datensatz enthalten und wegen der Übersichtlichkeit nicht dargestellt). Anschließend wird gemäß Schritt 403, Fig. 4 aus jeder nicht ausgeblendeten abstrakten Komponente AK, die keine Baugruppe darstellt, eine konkrete Komponente KK erzeugt. Wie im konkreten Schema 505 (hier noch ohne Verbindungen) zu sehen, wird auch die im abstrakten Schema vorgegebene Rotation, also die horizontale oder vertikale Lage einer abstrakten Komponente (z.B. Komponente 504.2) übernommen (als Komponente 505.1). Für die abstrakte Komponente 504.1 wurde keine konkrete Komponente erzeugt, weil diese zum Zeitpunkt der Erzeugung ausgeblendet war.

In Fig. 6 ist der Teil der verfahrensgemäßen Vorgehensweise zur Erzeugung von Verbindungen zwischen den konkreten Komponenten einer Baugruppe B dargestellt, wie sie laut Fig. 2, Bezugszeichen 208 angestoßen wird. Komponenten des abstrakten Schemas sind in Fig. 6 mit AK bezeichnet, Komponenten des konkreten Schemas mit KK. Zunächst wird durch die Hierarchie der Baugruppe bis zur untersten Ebene navigiert, so daß B = eine Baugruppe auf der untersten Ebene ist (Schritte 601, 602). Dort werden, beginnend bei einer beliebigen abstrakten Komponente AK alle abstrakten Komponenten abgearbeitet (Schritt 603 ff. Fig. 6), sofern sie im vorherigen, übergeordneten Schritt (Fig. 4, Schritt 403) in konkrete Komponenten verwandelt wurden. Für AK wird eine mit ihr verbundene Komponente AK2 gesucht (Schritt 608, 609). Gibt es für AK2 eine konkrete Komponente KK2, werden KK und KK2 mit dem gleichen Verbindungstyp an den gleichen Anschlüssen und mit der gleichen Flußrichtung miteinander verbunden, wie AK und AK2 (Schritt 610, Fig. 6). Gibt es keine konkrete Komponente KK2, wird AK2 "überlaufen", d.h. es wird die nächste, mit AK2 verbundene Komponente AK3 gesucht. (Schritt 611, Fig. 6). Gibt es AK3, wird der Ablauf ab Schritt 609 mit AK2 = AK3 wiederholt, wenn nicht, wird nach weiteren Komponenten gesucht, die mit AK verbunden sind. (Schritt 608). Sind alle Komponenten in B verbunden, verzweigt der Ablauf in Schritt 603 in den NEIN-Zweig, und die nächsthöhere Baugruppe wird bearbeitet (Schritt 604, Fig. 6), von der aus aber wieder zunächst der Abstieg in noch nicht bearbeitete Baugruppen erfolgt (Schritte 601, 602). Ist die oberste Baugruppe erreicht, geht der Ablauf bei Schritt 209 in Fig. 2 mit der Vergabe der Kennzeichnung weiter.

In Fig. 7 ist ein einfaches Beispiel für die Ergebnisse der Vorgehensweise gemäß Fig. 6 dargestellt. Gegeben ist ein abstraktes Schema 701 mit einer unterlagerten Baugruppe 702, das bereits gemäß Schritt 201, Fig. 2 bearbeitet wurde (Ergebnis: 703), d.h. für jede nicht ausgeblendete abstrakte Komponente existiert eine konkrete Komponente. Der Ablauf beginnt bei Schritt 601 mit B = Baugruppe wie in Bezugszeichen 701 dargestellt. Schritte 601, 602 führen zur unterlagerten Baugruppe, d.h. B = Baugruppe wie in Bezugszeichen 702 dargestellt. Unterhalb von B (702) gibt es keine weiteren Baugruppen. Der Ablauf geht weiter mit einer zufällig ausgewählten abstrakten Komponente AK 702.1, aus der die konkrete Komponente KK (703.1) hervorgegangen ist. Schritt 608, Fig. 6 findet als eine Komponente AK2, die mit AK verbunden ist, die mit Bezugszeichen 702.2 markierte Komponente. AK2 hat die Konkretisierung KK2 (703.2). KK2 wird gemäß Schritt 609, 610 Fig. 6 mit KK verbunden, und zwar so, daß die Verbindung bei KK (703.1) oben anschließt (wie bei 702.1) - und bei KK2 unten anschließt (wie bei 702.2). Das Ergebnis ist in Bezugszeichen 704 zu sehen. Die nächste Komponente, die gemäß Schritt 608, 609 Fig. 6 gefunden wird, weil sie mit AK (702.1) verbunden ist, ist der Anschlußpunkt 702.3, der AK (702.1) mit der darüberliegenden Baugruppe (701) und so mit der Komponente AK2 (701.5) verbindet. Auch AK2 (701.5) hat eine Konkretisierung KK2 (703.3) und die Verbindung zwischen KK und KK2 kann gemäß Schritte 609, 610, Fig. 6 erzeugt werden, und zwar so, daß die Verbindung bei KK (703.1) links anschließt (wie bei 702.1) und bei KK2 (703.3) rechts (wie bei 701.5) und daß die Flußrichtung auf KK (703.1) zuläuft. Das Ergebnis ist in Bezugszeichen 705 zu sehen. Die nächste Komponente, die gemäß Schritt 608 Fig. 6 gefunden wird, weil sie mit AK (702.1) verbunden ist, ist der Anschlußpunkt 702.4, der AK (702.1) mit der darüberliegenden Baugruppe (701) und so mit der Komponente AK2 (701.2) verbindet. In Schritt 609, Fig. 6 wird jedoch festgestellt, daß es für AK2 (701.2) keine konkrete Komponente gibt. Schritt 611, Fig. 6 "überläuft" AK2 (701.2) und findet die nächste abstrakte Komponente AK3 (701.4), die mit AK2 verbunden ist. Es wird AK2 = AK3 (701.4) gesetzt und im Ablauf bei Schritt 609, Fig. 6 wieder eingestiegen. AK2 (701.4) hat eine konkrete Komponente KK2, durch Bezugszeichen 703.4 markiert. In Schritt 610, Fig. 6 wird die Verbindung zwischen KK (703.1) und KK2 (703.4) hergestellt, und zwar so, daß die Verbindung bei KK (703.1) rechts anschließt (wie bei 702.1) und bei KK2 oben (wie bei 701.4) und daß die Flußrichtung auf KK2 (703.4) zuläuft. Das Ergebnis ist in Bild 706 zu sehen. Der Ablauf kehrt zu Schritt 603, Fig. 6 zurück und stellt fest, daß alle Komponenten in der Baugruppe B, Bezugszeichen 702, verbunden wurden und es keine weitere, nicht bearbeitete abstrakte Komponente in 702 gibt. Schritte 604, 605, Fig. 6 kehren zur obersten Baugruppe B = Baugruppe, wie in 701 dargestellt, zurück. Schritt 601, Fig. 6 stellt fest, daß es keine weitere unterlagerte, nicht bearbeitete Baugruppe von B gibt und geht zu Schritt 603, Fig. 6 über, um die Komponenten in B zu bearbeiten. Die letzte, nicht bearbeitete Komponente in B ist die abstrakte Komponente AK, die durch 701.3 bezeichnet ist, und die Konkretisierung KK, Bezugszeichen 703.5 hat. AK ist direkt mit AK2, Bezugszeichen 701.4, verbunden, die die Konkretisierung KK2, Bezugszeichen 703.4, hat. KK wird mit KK2 verbunden, und zwar so, daß die Verbindung bei KK (703.5) links anschließt (wie bei 701.3) und bei KK2 (703.4) rechts (wie bei 701.4). Das Ergebnis ist das vollständig verbundene konkrete Schema wie in Bezugszeichen 707 dargestellt.

In Fig. 8 ist der Teil der verfahrensgemäßen Vorgehensweise zur Vergabe von eindeutigen Kennzeichen nach einem Kennzeichnungssystem hier KKS (Kraftwerks-Kennzeichnungs-System) für eine Baugruppe B dargestellt, wie sie laut Fig. 2, Bezugszeichen 209 angestoßen wird. Voraussetzung für diesen Ablauf ist die Existenz eines konkreten Schemas, wie es in den Schritten 201 bis 208, Fig.2 erzeugt wird. Alle konkreten Komponenten erhalten ein Kennzeichen, das aus einen Präfix von beliebig vielen Zeichen und am Ende aus mindestens zwei Ziffern besteht (z.B. "LAB10AA000"). Die Verbindungen des Schemas weisen Richtungen auf, und das Schema kann sogenannte Zuläufe besitzen, d.h. Pfeile, von denen nur eine Verbindung als Abfluß ausgeht. Schritt 801, Fig. 8 beginnt bei einem beliebig ausgewählten "Zulauf" N, sofern es einen gibt. Schritt 802, Fig. 8 folgt der Verbindung in Flußrichtung und sucht die nächste Komponente N1 entlang der Verbindung, deren Kennzeichen mit den Ziffern "00" endet. Wurde eine solche Komponente N1 gefunden, wird in Schritt 803 zunächst das Maximum MAX der letzten zwei Stellen über alle Komponenten des Schemas ermittelt, die das gleiche Präfix wie N1 haben. N1 erhält die laufende Nummer MAX + 1, in zwei Ziffern dargestellt, z.B. Kennzeichen für N1 = "LAB10AA000", MAX = 1, Ziffern für N1 = "02", neues Kennzeichen für N1 = "LAB10AA002". Die Regeln des KKS schreiben vor, daß Meßstellen und Antriebe, die mit gekennzeichneten Komponenten verbunden sind, dasselbe Kennzeichen erhalten. Das ist in Schritt 804 und 805 realisiert. Danach sucht Schritt 802 entlang der Leitung(en), die von N1 ausgehen nach weiteren, unbearbeiteten Komponenten, um an ihnen den Vorgang zu wiederholen. Gibt es keine weiteren Komponenten in Flußrichtung, wird der Vorgang ab Schritt 801 an weiteren Zuflüssen wiederholt. Gibt es keine weiteren Zuflüsse mehr, wird in Schritt 807 nach Komponenten K gesucht, die im Zuge der Schritte 801 bis 806 nicht erreicht wurden, d.h. deren Kennzeichnung immer noch mit "00" endet. Schritt 808 vergibt an solche Komponenten ebenso wie in Schritt 803 ein eindeutiges Kennzeichen. Wie vorher auch erhalten Antriebe und Meßstellen, die mit gekennzeichneten Komponenten verbunden sind, deren Kennzeichen (Schritte 809, 810). Der Ablauf endet, wenn keine Komponenten mit den Ziffern "00" am Ende mehr im Schema sind.

In Fig. 9 ist ein einfaches Beispiel für die Ergebnisse der Vorgehensweise gemäß Fig. 8 dargestellt. Gegeben ist ein konkretes Schema 901. Der Einfachheit halber ist nur für vier ausgewählte Komponenten die Kennzeichnung als Text dargestellt. Die dargestellten Kennzeichen in 901 enden alle mit "00". Der Ablauf beginnt an einem zufällig ausgewählten Zufluß N, Bezugszeichen 901.1 und erreicht als erstes ein Ventil 901.2. Schritt 802, Fig. 8 erkennt, daß dessen Kennzeichen ("LA11AA000") mit "00" endet und vergibt das erste Kennzeichen. Gemäß Schritt 804, Fig. 8 erhält der mit dem Ventil verbundene Motor 901.8 dasselbe Kennzeichen wie 901.2. Von 901.2 aus geht es weiter zum Behälter 901.3 (dessen Kennzeichnung hier nicht erläutert werden soll) und von da aus in Richtung Abfluß, d.h. Ventil 901.4. Gemäß Schritt 803, Fig. 8 wird die maximale KKS-Nummer über alle Komponenten mit dem selben Präfix - "LA11AA0" gebildet, in diesem Fall ist das 1, weil die Komponente 901.2 bereits die Kennzeichnung "LA11AA001" hat. Das Ventil 901.4 erhält deswegen "LA11AA002". Das Ergebnis bis hier ist in Bezugszeichen 902 dargestellt. Von Ventil 901.4 aus gibt es in Flußrichtung keine weiteren, zu kennzeichnenden Komponenten. Der Ablauf setzt bei Schritt 801, Fig. 8 neu auf und findet den zweiten Zufluß 901.5. Von dort aus werden die Schritte 802 bis 806 wiederholt ausgeführt, und die Komponenten 901.6 und 901.9 werden mit Kennzeichnung versehen. Entlang der Flußrichtung gelangt der Mechanismus zum Behälter 901.3 und Ventil 901.4, die bereits gekennzeichnet sind. Das Ergebnis bis hier ist in Bezugszeichen 903 zu sehen. Es gibt keine weiteren Komponenten in Flußrichtung und auch keine weiteren unbearbeiteten Zuflüsse. Deshalb fährt der Ablauf bei Schritt 807, Fig. 8 fort und findet die Komponente 901.7. Die Kennzeichnung wird vergeben. Es gibt noch keine anderen Komponenten mit Kennzeichen mit Präfix "LA10CL0", deshalb erhält die Komponente 901.7 das Kennzeichen "LA10CL001". Es gibt keine weiteren Komponenten, deren Kennzeichen mit "00" endet und das Verfahren endet hier. Das Ergebnis ist in Bezugszeichen 904 zu sehen.

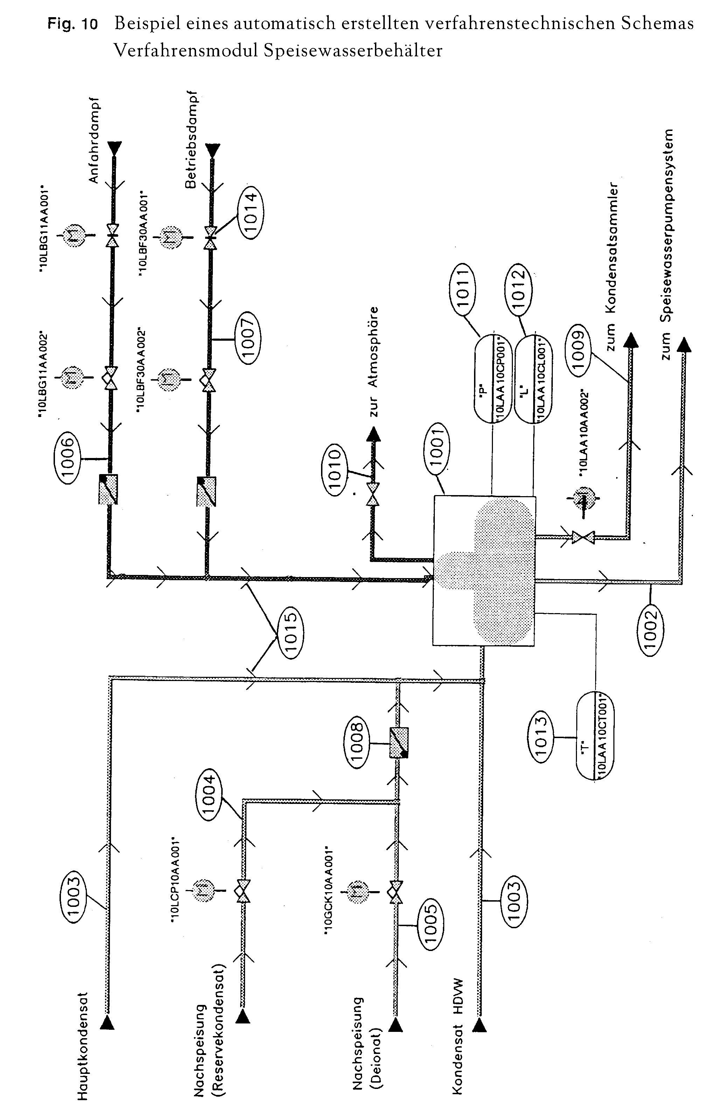

In Fig. 10 ist ein Beispiel für ein automatisch erstelltes verfahrenstechnisches Schema dargestellt. Es beinhaltet eine Variante des Verfahrensmoduls Speisewasserbehälter (SpWB). In Fig. ist ein solches Schema andeutungsweise unter Bezugszeichen 111 dargestellt.

Der SpWB 1001 dient im Kraftwerk als Pufferbehälter zum Ausgleich von kurzzeitigen Massenstromdifferenzen zwischen Speisewasserbedarf 1002 und Kondensatrückfluß 1003. Die Wasserverluste im Kreislauf werden durch Nachspeisung über Regelventile und eine Rückschlagklappe 1008 mit Reservekondensat 1004 oder Deionat 1005 ausgeglichen. Die Speisewasseranwärmung erfolgt durch Einleitung von Anfahrdampf 1006 oder Betriebsdampf 1007, jeweils über einen Absperrschieber, Regelventil und eine Rückschlagklappe. Für den sicheren Betrieb des SpW -Behälters sorgen weiter die Einrichtungen zur Überlaufsicherung 1009 und Entgasung 1010.

Das Schema beinhaltet die für die Automatisierung erforderlichen Messungen für Druck 1011, Niveau 1012 und Temperatur 1013 des SpWB, die in dieser Planungsphase zuerst einfach als Aufgabenstellung erfaßt sind. Eine gegebenenfalls erforderliche redundante Auslegung der Messungen erfolgt später. Armaturen, die automatisiert werden, sind mit Motoren ausgerüstet, z.B. Absperrschieber für Betriebsdampf 1014. Nichtautomatisierte, aber zum Verständnis des verfahrenstechnischen Prozesses wichtige Komponenten, sind ebenfalls dargestellt, z.B. die Rückschlagklappe 1008. Die Medien-Flußrichtung in den Verbindungen (Rohrleitungen) ist durch Pfeile 1015 gekennzeichnet.

Eine Kennzeichnung ist bei den für die Automatisierung relevanten Komponenten, wie z.B. am Absperrschieber für Betriebsdampf 1014 im Schema sichtbar. Die Kennzeichnung der übrigen Komponenten ist in den Informationen zu konkreten Komponenten (vergl. Fig. 1,105) gespeichert.

### Bezugszeichenliste

- 100: abstraktes verfahrenstechnisches Schema
- 101 bis 104: Baugruppen-Ebenen des abstrakten Schemas
- 103.1 bis 103.3: Varianten zur Ebene 103
- 105: konkrete Komponenten
- 106: Anwendervorgaben
- 107: Anpassung durch Deaktivierung
- 108: Abbildungsvorschriften
- 109: Platzhalter
- 110: -
- 111: konkretes verfahrenstechnisches Schema
- 112 bis 113: Detaillierungsstufen von 111
- 114: Detailschema
- 115: Mehrfache Umsetzung von Strängen 116
- 116: Komponentenstrang
- 117: Richtungspfeile
- 118: Kennzeichnungssystem
- 119: -

- 201 bis 207: Bearbeitungsschritte für Verfahrenstechnik-Schema (alle Ebenen)
- 301 bis 307: Beispiel für Bearbeitung gemäß 201 bis 207
- 401 bis 406: Bearbeitungsschritte zu einer Baugruppe B (eine Ebene)
- 501: Beispiel für eine abstrakte Baugruppe
- 502: Beispiel für Abbildungsvorschriften
- 503: Beispiel für einen Eingabevektor
- 504 bis 505: Beispiel für Umwandlung in konkrete Komponenten
- 601 bis 612: Schritte zur Herstellung von Verbindungen zwischen Komponenten
- 701 bis 707: Beispiel zu den Schritten gemäß 601 bis 612
- 801 bis 810: Schritte zur Vergabe von Kennzeichen
- 901 bis 904: Beispiel zur Kennzeichnung
- AK: Komponenten des abstrakten Schemas
- KK: Komponenten des konkreten Schemas

## Patentansprüche

1. Verfahren zum automatisierten Erstellen eines graphischen verfahrenstechnischen Schemas für einen konkreten technischen Prozeß unter Einsatz einer Datenverarbeitungseinrichtung und eines darin gespeicherten Expertensystems, wobei
a) ein abstraktes verfahrenstechnisches Schema (100) vorhanden ist,
- das durch mehrere, hierarchischen Ebenen zugeordnete abstrakte Baugruppen (101,102,103,104) gebildet ist,
- die abstrakten Baugruppen (101,102,103,104) miteinander verbundene Platzhalter (109) für an ihrer Stelle einsetzbare konkrete Komponenten (105) - oder Gruppen davon - enthalten,
b) Informationen zu den konkreten Komponenten (105) gespeichert sind,
c) Eingabevektoren (503) vor dem Start des Erstellungsverfahrens eingebbar sind, die Anwendervorgaben (106) repräsentieren,
d) Abbildungsvorschriften (502) gespeichert sind, die angeben, wie in Abhängigkeit von den Eingabevektoren (503) das abstrakte Schema (100) in ein konkretes verfahrenstechnisches Schema (111) umzusetzen ist, und insbesondere, welche abstrakten Komponenten (AK, z.B. 504.1) vor der Umsetzung ausgeblendet werden sollen,
e) nach dem Start des Verfahrens eine Umsetzung des abstrakten Schemas (100) in ein konkretes Schema (111) durch Bearbeitung der Baugruppe (101) in der obersten Ebene erfolgt, wobei zur Umsetzung der Platzhalter (109) in konkrete Komponenten (105), oder Gruppen davon, in Abhängigkeit von den Abbildungsvorschriften (502) und den Eingabevektoren (503) unterlagerte Baugruppen (102,103,104) aufgerufen und bearbeitet werden.

2. Verfahren nach Anspruch 1, dadurch gekennzeichnet, daß für eine zu bearbeitende Baugruppe (B) einer hierarchischen Ebene (z.B. 103) mehrere Varianten (z.B. 103.1,103.2,103.3) wählbar sind und daß für eine zu bearbeitende abstrakte Komponente (AK, z.B. 504.3) mehrere Komponententypen vor der Umsetzung wählbar sind.

3. Verfahren nach einem der vorstehenden Ansprüche, dadurch gekennzeichnet, daß während der Generierung eines konkreten Schemas (111) mehrfach auf den selben Baugruppentyp (z.B. 302) zugegriffen wird, der an verschiedenen Stellen im selben Schema verwendet wird.

4. Verfahren nach einem der vorstehenden Ansprüche, dadurch gekennzeichnet, daß durch die Abbildungsvorschriften (502) Vorschriften vorgegeben werden, die bewirken, daß Teile (z.B. 102) des abstrakten Schemas zur Vervielfältigung markiert werden, um im konkreten Schema (111) mehrfach, d.h. in mehrere Komponenten-Stränge (116) umgesetzt zu werden.

5. Verfahren nach einem der vorstehenden Ansprüche, dadurch gekennzeichnet, daß das abstrakte Schema (100) auch Detailschemata enthält, die bei der Umsetzung in ein konkretes Schema jeweils als zusätzliches Detailschema (114) erstellt werden.

6. Verfahren nach einem der vorstehenden Ansprüche, dadurch gekennzeichnet, daß die Informationen zu den konkreten Komponenten (105) als Datensätze aufgefaßt werden, und die Abbildungsvorschriften (502) Angaben darüber enthalten, wie die Datensätze mit Werten belegt werden müssen aufgrund des mit den Eingabevektoren (503) eingegebenen Wissens über Eigenschaften des zu generierenden Verfahrensschemas (111).

7. Verfahren nach einem der vorstehenden Ansprüche, dadurch gekennzeichnet, daß im konkreten Schema (111) Richtungspfeile (117) eingetragen werden, die eine Flußrichtung von Medien angeben.

8. Verfahren nach einem der vorstehenden Ansprüche, dadurch gekennzeichnet, daß alle Komponenten im konkreten Schema (111) mit einer eindeutigen Kennzeichnung versehen werden.

## Revendications

1. Procédure d'établissement automatique d'un schéma processuel pour un processus technique concret, recourant à une installation informatique et à un système expert mémorisé dans ladite installation,
a) présentant un schéma processuel abstrait(100)
- constitué de plusieurs groupes abstraits (101, 102, 103, 104) affectés à des niveaux hiérarchisés,
- où les groupes abstraits (101, 102, 103, 104) contiennent des labels de position (109) reliés les uns aux autres pour les composants concrets (105) - ou groupes desdits composants - insérables à leur place,
b) où sont mémorisées des informations sur les composants concrets (105),
c) où des vecteurs d'entrée (503), représentant des préalables d'utilisateur (106), peuvent être introduits avant de lancer la procédure d'établissement,
d) où sont mémorisées des prescriptions de représentation (502) indiquant comment, en fonction des vecteurs d'entrée (503), le schéma abstrait (100) doit être converti en schéma processuel concret (111), et notamment quels composants abstraits (AK, p. ex. 504.1) doivent être extraits avant conversion,
e) où, après lancement de la procédure, une conversion du schéma abstrait (100) en un schéma concret (111) est réalisée par traitement du groupe (101) au niveau le plus élevé, des groupes subordonnés (102, 103, 104) étant appelés et traités en vue de la traduction des labels de position (109) en composants concrets (105) ou groupes desdits composants, en fonction des prescriptions de représentation (502) et des vecteurs d'entrée (503).

2. Procédure selon revendication 1, caractérisée en ce que plusieurs variantes (p. ex. 103.1, 103.2, 103.3) peuvent être sélectionnées pour un groupe (B) à traiter à un niveau de la hiérarchie (p. ex. 103), et en ce que plusieurs types de composants peuvent être sélectionnés avant conversion pour un composant abstrait à traiter (AK, p. ex. 504.3).

3. Procédure selon l'une des revendications précédentes, caractérisée en ce qu'il est accédé lors de la génération d'un schéma concret (111) plusieurs fois au même type de groupe (p. ex. 302), utilisé à différents endroits du même schéma.

4. Procédure selon l'une des revendications précédentes, caractérisée en ce des consignes sont données par les prescriptions de représentation (502), lesquelles ont pour effet de marquer pour reproduction des éléments (p. ex. 102) du schéma abstrait, afin de les convertir plusieurs fois dans le schéma concret (111), autrement dit en plusieurs barres de composants (116).

5. Procédure selon l'une des revendications précédentes, caractérisée en ce que le schéma abstrait (100) comprend aussi des schémas de détail, lesquels sont respectivement réalisés comme schémas complémentaires de détail (114) lors de la conversion en schéma concret.

6. Procédure selon l'une des revendications précédentes, caractérisée en ce les informations sur les composants concrets (105) sont comprises comme articles, et que les prescriptions de représentation (502) comportent des indications sur l'attribution de valeurs aux articles sur la base des connaissances introduites avec les vecteurs d'entrée (503) et relatives aux caractéristiques du schéma processuel (111) à générer.

7. Procédure selon l'une des revendications précédentes, caractérisée en ce que des flèches directionnelles (117), indiquant un sens de circulation des milieux, sont portées dans le schéma concret (111).

8. Procédure selon l'une des revendications précédentes, caractérisée en ce tous les composants du schéma concret (111) sont pourvus d'un qualificateur distinctif.

## Claims

1. A method for the automated generation of a graphical process diagram for a concrete technical process by using a data processing device and an expert system stored in the same, with
a) an abstract process diagram (100) being present
- which is formed by several abstract modules (101, 102, 103, 104) which are assigned to hierarchical levels;
- the abstract modules (101, 102, 103, 104) comprise mutually connected wildcards (109) for concrete components (105), or groups thereof, which can be used in their place;
b) information on the concrete components (105) being stored;
c) input vectors (503), which represent user default values (106), being enterable prior to the start of the production process;
d) display regulations (502) being stored which indicate how the abstract diagram (100) is to be implemented into a concrete process diagram (111) depending on the input vectors (503), and in particular which abstract components (AK, e.g 504.1) are to be blanked out prior to the implementation;
e) after the start of the process there being an implementation of the abstract diagram (100) into a concrete diagram(111) by processing the module (101) in the uppermost level, with underlying modules (102, 103, 104) being called and processed for the implementation of the wildcards (109) into concrete components (105), or groups thereof, depending on the display regulations (502) and the input vectors (503).

2. A method as claimed in claim 1, characterised in that several variants (e.g. 103.1, 103.2, 103.3) can be chosen for a module (B) of a hierarchical level (e.g. 103) to be processed and that for an abstract component to be processed (AK, e.g. 504.3) several types of components can be chosen prior to the implementation.

3. A method as claimed in one of preceding claims, characterised in that during the generation of a concrete diagram (111) the same type of module (e.g. 302) is accessed several times which is used at different locations in the diagram.

4. A method as claimed in one of the preceding claims, characterised in that regulations are predetermined by the display regulations (502) which ensure that parts (e.g. 102) of the abstract diagram are marked for duplication in order to be implemented in the concrete diagram (111) several times, i.e. in several component sections (116).

5. A method as claimed in one of the preceding claims, characterised in that the abstract diagram (100) also comprises detailed diagrams which are each produced as an additional detailed diagram (114) during the implementation into a concrete diagram.

6. A method as claimed in one of the preceding claims, characterised in that the information on the concrete components (105) are regarded as data records and the display regulations (502) comprise data on how the data records must be assigned with values as a result of the knowledge entered with the input vectors (503) on the properties of the process diagram (111) to be generated.

7. A method as claimed in one of the preceding claims, characterised in that directional arrows (117) are entered in the concrete diagram (111) which indicate a direction of media flow.

8. A method as claimed in one of the preceding claims, characterised in that all components in the concrete diagram (111) are provided with a unique identification.
